# EUROPÄISCHE PATENTANMELDUNG

(11) **EP 2 164 123 A1**
(43) Veröffentlichungstag der Anmeldung: **17.03.2010**
(21) Anmeldenummer: 08016238.1
(22) Anmeldetag: 15.09.2008
(51) Int. Cl.: H01M 8/04, H01M 8/10

(54) **Erhöhung der Wasserrückgewinnung und Wärmerückgewinnung eines Direkt-Methanol-Brennstoffzellensystems**

(71) Anmelder: SFC Smart Fuel Cell AG, 85649 Brunnthal-Nord (DE)
(72) Erfinder: Loch, Jörg, 81379 München (DE); Graf, Verena, 81825 München (DE)
(74) Vertreter: Grünecker, Kinkeldey, Stockmair & Schwanhäusser Anwaltssozietät

(57) **Zusammenfassung**

Die Erfindung betrifft ein Brennstoffzellensystem, umfassend: eine Überträgereinrichtung zum Übertragen von Wärmeenergie und Wasser aus der Abluft des Brennstoffzellensystems auf die Frischluft für das Brennstoffzellensystem, wobei die Überträgereinrichtung einen ersten und einen zweiten Abschnitt aufweist und die Abluft durch den ersten Abschnitt und die Frischluft durch den zweiten Abschnitt führbar ist. Weiterhin betrifft die Erfindung ein Verfahren zur Wärme- und Wasserrückgewinnung aus der Abluft eines Brennstoffzellensystems mit den Schritten: Führen der Abluft durch einen ersten Abschnitt einer Überträgereinrichtung; Führen von Frischluft für das Brennstoffzellensystem durch einen zweiten Abschnitt der Überträgereinrichtung; Übertragen von Wärmeenergie und Wasser aus der Abluft im ersten Abschnitt auf die Frischluft im zweiten Abschnitt.

## Beschreibung

### Gebiet der Erfindung

Die Erfindung betrifft ein Verfahren zur Wärme- und Wasserrückgewinnung aus dem Abgas eines Brennstoffzellensystems sowie ein Brennstoffzellensystem in welchem diese Verfahren durchgeführt wird.

### Stand der Technik

Der Betrieb von Direktmethanolbrennstoffzellensystemen (DMBZ) mit einem inneren, verdünnten Methanolkreislauf stellt eine technische Herausforderung dar. Der derzeitige Stand der Technik ermöglicht das Betreiben von Direktmethanolbrennstoffzellensystemen mit 100 %igem Methanol bis zu einer Grenz-Umgebungstemperatur beim Einsatz von luftgekühlten Kondensatoren (wobei die Grenz-Umgebungstemperatur abhängig von der Größe des Kondensators ist, beispielsweise ca. 43 °C sein kann).

Im Innern des Systems wird eine geeignete Methanolmischung aus dem Kondensat des Reaktionswassers bei Luftkühlung gegen Umgebungstemperatur bereitgestellt. Bei Umgebungstemperaturen größer als die Grenz-Umgebungstemperatur muss in der Regel das 100 %ige Methanol, welches der Methanolmischung zugeführt wird, bereits mit Wasser angereichert werden, um einen erhöhten Wasserverlust über den Abgasstrom auszugleichen. Dadurch verschlechtert sich die Energiedichte des Brennstoffzellensystems bzw. der Heizwert des Brennstoffs. Ein Betrieb mit unverdünntem Methanol wird deshalb angestrebt, um maximale Energiedichte zu erhalten.

Bisher wird der Wasserhaushalt eines DMBZ-Systems durch Kondensation von Wasserdampf über einen Wärmetauscher in Kombination mit einem Lüfter gegen Umgebungstemperatur geregelt. Der Wärmetauscher kühlt mit der durchströmenden Umgebungsluft das Abgas gerade soweit herunter, dass nur soviel Wasser als Dampf das System verlässt, um die angestrebte Menge und Konzentration der Methanollösung aufrecht zu erhalten. Dies wird in den Dokumenten EP 1383190 B1 und EP 1383191 B1 beschrieben.

Aus dem kathodenseitigen Volumenstrom der Luft, bezogen auf das Energieäquivalent des DMBZ-Systems, ergibt sich eine Grenzablufttemperatur für den Abgasstrom, bei der die Bilanz aus produziertem und abgegebenem Wasser ausgeglichen ist (bei obigem Beispiel ergibt sich eine Grenzablufttemperatur von ca. 47 °C).

Um den Abgasstrom mit einem Wärmetauscher auf diese Temperatur kühlen zu können, muss die Umgebungslufttemperatur kühler sein als diese Grenztemperatur. Je nach Wärmetauschereffizienz und Kühlluftstrom muss dieser Unterschied wenigstens ca. 4 K sein. Daraus ergibt sich wiederum eine obere Grenze für die Umgebungslufttemperatur, bei der das DMBZ-System ohne Nettowasserverlust über die Abluft betrieben werden kann (bei obigem Beispiel liegt diese obere Grenze für die Umgebungslufttemperatur also bei ca. 43 °C, abhängig von der relativen Feuchte der Umgebungsluft).

Oberhalb dieser Grenze geht mehr Feuchte in Form von Dampf über das Abgas verloren als in der chemischen Umsetzung des Methanols erzeugt wird. Daraus resultierend fällt das Flüssigkeitsniveau im inneren Kreislauf des DMBZ-Systems. Unterschreitet das Flüssigkeitsniveau ein bestimmtes Maß, kann das System nicht mehr betrieben werden, da dem System die verdünnte Methanollösung entzogen wird.

### Beschreibung der Erfindung

Angesichts der Nachteile des Stands der Technik, liegt der Erfindung die Aufgabe zugrunde, ein Brennstoffzellensystem und ein Verfahren zum Betreiben desselben bereitzustellen, wobei die oben genannten Nachteile überwunden werden und insbesondere die obere Grenze für die Umgebungslufttemperatur, bei der das DMBZ-System ohne Nettowasserverlust betrieben werden kann, gegenüber dem Stand der Technik angehoben wird.

Die genannte Aufgabe wird gelöst durch eine erfindungsgemäßes Verfahren zur Wärme- und Wasserrückgewinnung aus der Abluft eines Brennstoffzellensystems mit den Schritten: Führen der Abluft durch einen ersten Abschnitt einer Überträgereinrichtung; Führen von Frischluft für das Brennstoffzellensystem durch einen zweiten Abschnitt der Überträgereinrichtung; Übertragen von Wärmeenergie und Wasser aus der Abluft im ersten Abschnitt auf die Frischluft im zweiten Abschnitt.

Auf diese Weise wird der Abluft sowohl Wärme als auch Wasser entzogen, die Abluft wird also gekühlt und entfeuchtet. Wenigstens ein Teil dieser Wärmeenergie und des Wassers wird der Frischluft zugeführt, wodurch diese also erwärmt und befeuchtet wird. Dabei kann ein Teil der übertragenen Wärme mit dem übertragenen Wasser transportiert werden. Ein anderer Teil der Wärme kann durch eine Grenzschicht bzw. eine Trennwand zwischen dem ersten und dem zweiten Abschnitt der Überträgereinrichtung mittels Wärmeleitung transportiert werden. Die Grenzschicht bzw. die Trennwand ist für Luft undurchlässig, weist jedoch eine Durchlässigkeit für Wassers (beispielsweise in Form von Poren) auf.

Das erfindungsgemäße Verfahren kann dahingehend weitergebildet werden, dass das Übertragen von Wärmeenergie und Wasser in der Überträgereinrichtung folgenden Schritt umfassen kann: Leiten von Wasser vom ersten Abschnitt in den zweiten Abschnitt durch Kapillaren, welche den ersten und den zweiten Abschnitt miteinander verbinden. In dieser Weiterbildung kann auf Grund des Effekts der Kapillarität das Übertragen des Wassers von dem ersten zum zweiten Abschnitt erfolgen.

Die zuvor genannte Weiterbildung kann dahingehend weitergebildet werden, dass die Überträgereinrichtung ein Bündel von Röhrchen umfassen kann, sich die Kapillaren in den Wänden der Röhrchen befinden, und wobei entweder der erste Abschnitt einen Innenbereich innerhalb der Röhrchen umfasst und der zweite Abschnitt einen Außenbereich außerhalb der Röhrchen umfasst, oder wobei der zweite Abschnitt einen Innenbereich innerhalb der Röhrchen umfasst und der erste Abschnitt einen Außenbereich außerhalb der Röhrchen umfasst. Auf diese Weise kann eine zum Beispiel nach dem Prinzip des Rohrbündelwärmetauschers ausgebildete Überträgereinrichtung verwendet werden, wobei die Röhrchen des Rohrbündelwärmetauschers aus Kunststoff bzw. aus Hohlfasern bestehen können und die Röhrchenwände Kapillaren aufweisen.

Das erfindungsgemäße Verfahren und die zuvor genannten Weiterbildungen können dahingehend weitergebildet werden, dass die Frischluft und die Abluft im Gegenstrom zueinander geführt werden können. Dadurch ist die Kühlung der Abluft bzw. die Erwärmung der Frischluft sehr effektiv.

Das erfindungsgemäße Verfahren und die zuvor genannten Weiterbildungen können dahingehend weitergebildet werden, dass die Abluft des Brennstoffzellensystems in einem vorangehenden Schritt in einem Wärmetauscher abgekühlt werden kann. Auf diese Weise kann die Effizienz der Wärmerückgewinnung gesteigert werden.

Die zuvor genannte Weiterbildung kann dahingehend weitergebildet werden, dass das durch das Abkühlen der Abluft im Wärmetauscher auskondensierte Wasser abgetrennt und dem Brennstoffzellensystem zugeführt werden kann. Auf diese Weise kann die Effizienz der Wasserrückgewinnung gesteigert werden.

Das erfindungsgemäße Verfahren und die zuvor genannten Weiterbildungen können dahingehend weitergebildet werden, dass verhindert werden kann, dass sich die Abluft und die Frischluft in der Überträgereinrichtung mischen.

Die oben genannte Aufgabe wird weiterhin gelöst durch ein erfindungsgemäßes Brennstoffzellensystem, umfassend: eine Überträgereinrichtung zum Übertragen von Wärmeenergie und Wasser aus der Abluft des Brennstoffzellensystems auf die Frischluft für das Brennstoffzellensystem, wobei die Überträgereinrichtung einen ersten und einen zweiten Abschnitt aufweist und die Abluft durch den ersten Abschnitt und die Frischluft durch den zweiten Abschnitt führbar ist.

Das erfindungsgemäße Brennstoffzellensystem kann dahingehend weitergebildet werden, dass es weiterhin umfassen kann: Kapillaren, welche den ersten und den zweiten Abschnitt miteinander verbinden, zum Durchleiten von Wasser vom ersten Abschnitt in den zweiten Abschnitt.

Die zuvor genannte Weiterbildung kann dahingehend weitergebildet werden, dass die Überträgereinrichtung ein Bündel von Röhrchen umfassen kann, sich die Kapillaren in den Wänden der Röhrchen befinden, und wobei entweder der erste Abschnitt einen Innenbereich innerhalb der Röhrchen umfasst und der zweite Abschnitt einen Außenbereich außerhalb der Röhrchen umfasst, oder wobei der zweite Abschnitt einen Innenbereich innerhalb der Röhrchen umfasst und der erste Abschnitt einen Außenbereich außerhalb der Röhrchen umfasst.

Die zuvor genannte Weiterbildung kann dahingehend weitergebildet werden, dass die Überträgereinrichtung weiterhin eine Ummantelung aufweisen kann, welche die Röhrchen und den Außenbereich außerhalb der Röhrchen umgibt.

Das erfindungsgemäße Brennstoffzellensystem und die zuvor genannten Weiterbildungen können dahingehend weitergebildet werden, dass die Frischluft und die Abluft im Gegenstrom zueinander führbar sind.

Das erfindungsgemäße Brennstoffzellensystem und die zuvor genannten Weiterbildungen können dahingehend weitergebildet werden, dass das Brennstoffzellensystem weiterhin einen Wärmetauscher zum Abkühlen der Abluft des Brennstoffzellensystems umfassen kann, wobei der Wärmetauscher derart angeordnet ist, dass die Abluft zunächst durch den Wärmetauscher und nachfolgend durch die Überträgereinrichtung geführt wird.

Die zuvor genannte Weiterbildung kann dahingehend weitergebildet werden, dass das Brennstoffzellensystem weiterhin Mittel zum Abtrennen von im Wärmetauscher auskondensiertem Wasser umfassen kann.

Das erfindungsgemäße Brennstoffzellensystem und die zuvor genannten Weiterbildungen können dahingehend weitergebildet werden, dass die Überträgereinrichtung derart ausgebildet sein kann, dass sich darin die Abluft und die Frischluft nicht mischen, insbesondere derart, dass die Kapillaren durch das darin durchgeleitete Wasser gegen Luftdurchtritt abdichtbar sind.

Die verschiedenen Weiterbildungen lassen sich unabhängig voneinander einsetzen oder geeignet miteinander kombinieren.

Nachfolgend wird die Erfindung nochmals im Zusammenhang mit einer weiter unten beschriebenen speziellen Ausführungsformen dargestellt.

Eine gegenüber dem Stand der Technik zusätzlich eingeführte Komponente der Überträgereinrichtung, die auch Wärme- und Stoffüberträger genannt werden kann, kann ähnlich dem Prinzip eines Rohrbündelwärmetauschers das feuchte Abgas vor dem Verlassen des Systems im Gegenstrom an der angesaugten Frischluft entlang führen. Das Material des Röhrchenbündels kann die Eigenschaft haben, Wasser durch Kapillaren in den Röhrchenwänden zu leiten, ohne jedoch die beiden Gasströme zu vermischen.

Das in der Regel stets wasserdampfgesättigte Abgas kann zunächst, wie es auch Stand der Technik ist, in einem Wärmetauscher annähernd auf Umgebungstemperatur abgekühlt, und das dabei anfallende Kondensat kann im Zwischentank des Systemkreislaufs abgetrennt werden. Die vorherige Abtrennung des Kondensats verbessert die Effizienz der Wasserrückgewinnung.

Danach wird das immer noch restfeuchte Abgas durch das Mantelrohr der Überträgereinrichtung um das Röhrchenbündel herum geführt und verlässt das System. Die Frischluft wird durch das Röhrchenbündel geführt und nimmt dort einen Teil der Restfeuchte und Wärme auf. Die deutlich erwärmte und befeuchtete Frischluft wird dann dem Brennstoffzellen-Stack zugeführt und gelangt letztlich als Abgas wieder zur Überträgereinrichtung.

Durch den Wärme- und Wasserübertrag entzieht der kühlere Frischluftstrom dem heißen Abgasstrom einen Teil des Wasserdampfes und wird dabei deutlich erwärmt. Diese erwärmte Frischluft enthält einen erhöhten Anteil an Feuchte, die im Systemkreislauf zirkuliert. Die Grenztemperatur für einen ausgeglichenen Wasserhaushalt hängt dadurch im Wesentlichen von der Effizienz des Wasserübertrags ab.

Eine solche Überträgereinrichtung bewirkt, dass die Grenztemperatur eines DMBZ-Systems bei Betrieb mit 100 %igem Methanol um etwa 20 K auf ca. 60 °C Umgebungstemperatur erhöht werden kann. Dies schafft enorme technische und wirtschaftliche Vorteile. Ein DMBZ System ist dadurch in allen Temperaturbereichen von -40 °C bis +60 °C einsetzbar. Die Systeme können ohne Leistungsverluste 100 %iges Methanol zur elektrischen Energieerzeugung nutzen und somit die Stärken eines Brennstoffzellensystems, nämlich insbesondere mit hoher Energiedichte Strom zu erzeugen, ausspielen.

Eine bevorzugte Ausführungsform der Erfindung wird im Nachfolgenden unter Bezugnahme auf die Zeichnungen beschrieben.

### Kurzbeschreibung der Zeichnungen

- Fig. 1: zeigt ein Verfahrensfließbild für ein Brennstoffzellensystem nach dem Stand der Technik.
- Fig. 2: zeigt ein Verfahrensfließbild für ein erfindungsgemäßes Brennstoffzellensystem.

### Beschreibung der Ausführungsformen

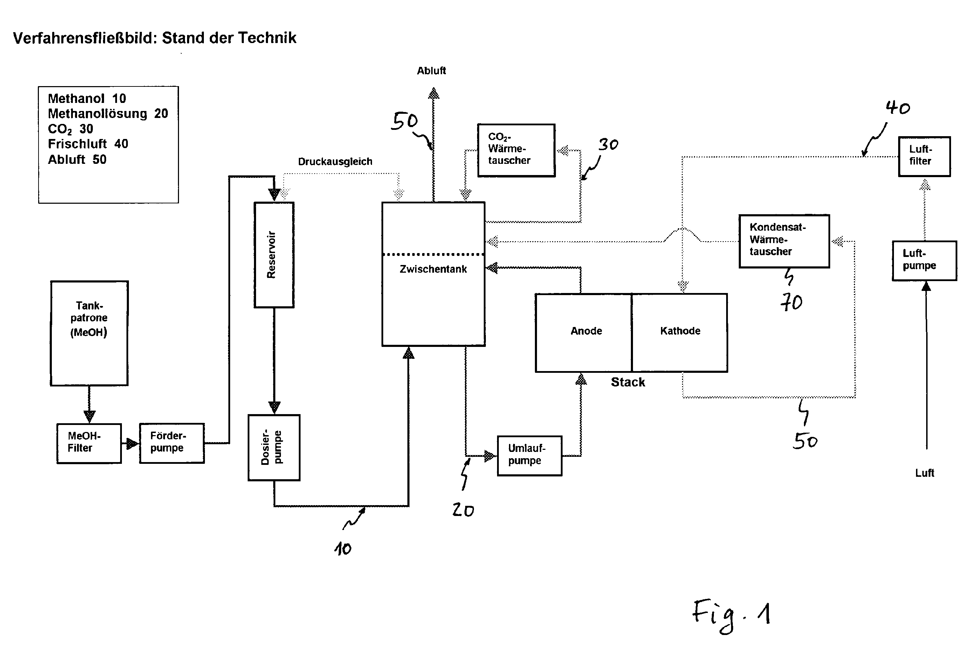

Figur 1 zeigt ein Verfahrensfließbild für ein Brennstoffzellensystem nach dem Stand der Technik. Das Brennstoffzellensystem umfasst ein Stack von Brennstoffzellen mit jeweils einer Anode und einer Kathode.

Der Anode der jeweiligen Brennstoffzelle wird eine Methanol-Wasser-Mischung 20 aus einem "Zwischentank" genannten Behälter in einem Kreislaufprozess zugeführt. Von der Anode abgehendes Fluid einschließlich von an der Anode entstandenem CO₂ wird wieder in den Zwischentank geleitet. Reines Methanol 10 wird beispielsweise mittels Pumpen aus einer Tankpatrone in den Zwischentank eingebracht.

Der Kathode der jeweiligen Brennstoffzelle wird Frischluft 40 zur Sauerstoffbereitstellung an der Kathode zugeführt.

Die Abluft 50 von der Kathode durchläuft einen Wärmetauscher 70, welcher mittels Luftkühlung die Abluft kühlt, wodurch Wasserdampf in der Abluft zum Teil kondensiert. Dieses kondensiertes Wasser wird im nachfolgenden Zwischentank zu einem gewissen Teil abgetrennt und dem Kreislauf mit der Methanollösung 20 beigemischt. Daher ist der Zwischentank ein Mittel zum Abtrennen von im Wärmetauscher auskondensiertem Wasser. Die Kühlung des Wärmetauschers 70 wird dabei so geregelt, dass die Abluft gerade soweit heruntergekühlt wird, dass nur soviel Wasser als Dampf in der Abluft das System verlässt, dass die Konzentration der Methanollösung erhalten bleibt.

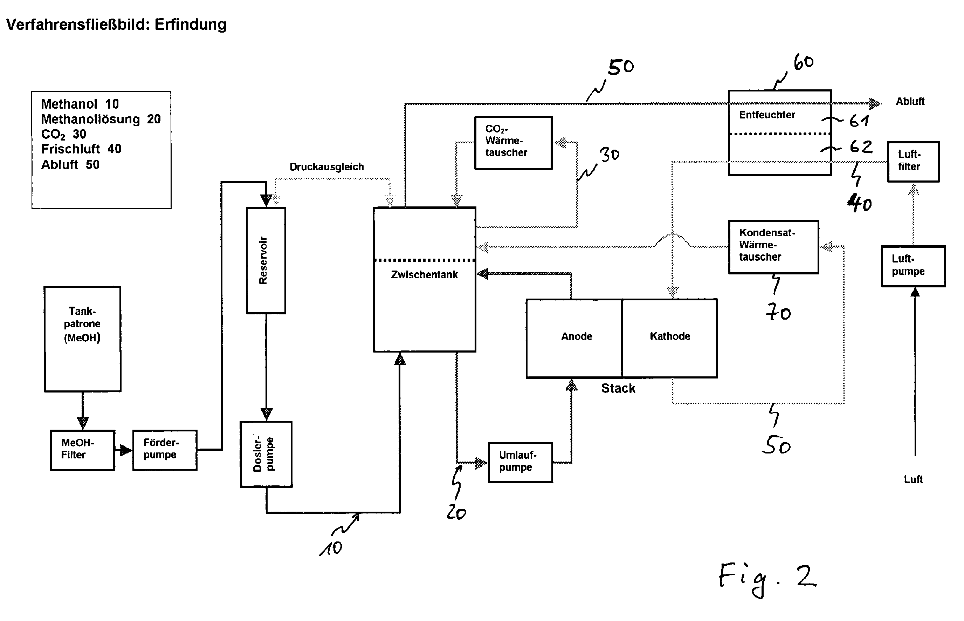

Figur 2 zeigt ein Verfahrensfließbild für ein erfindungsgemäßes Brennstoffzellensystem. Gegenüber dem Verfahrensfließbild nach dem Stand der Technik gemäß Figur 1 besteht der Unterschied darin, dass eine Überträgereinrichtung 60 zum Übertragen von Wärmeenergie und Wasser aus der Abluft 50 des Brennstoffzellensystems auf die Frischluft 40 für das Brennstoffzellensystem vorgesehen ist. Diese Überträgereinrichtung 60 wirkt als Entfeuchter für die Abluft 50 und als Befeuchter für die Frischluft 40.

Die Überträgereinrichtung 60 umfasst beispielsweise einen Rohrbündelwärmetauscher, worin die feuchte Abluft 50 vor dem Verlassen des Systems im Gegenstrom an der angesaugten Frischluft 40 entlang geführt wird. Dabei ist das Material des Röhrchenbündels derart, dass Wasser durch Kapillaren in den Röhrchenwänden durchgeleitet werden kann, ohne dass dabei die beiden Gasströme zu vermischen.

Die restfeuchte Abluft 50 wird durch ein Mantelrohr der Überträgereinrichtung 60 um das Röhrchenbündel herum geführt und verlässt das System. Die Frischluft 40 wird nach der Luftpumpe und einem Filter durch das Röhrchenbündel geführt und nimmt dort einen Teil der Restfeuchte und Wärme auf. Die deutlich erwärmte und befeuchtete Frischluft 40 wird dann dem Brennstoffzellen-Stack zugeführt und gelangt nach chemischer Umsetzung, Durchlaufen des Wärmetauschers und Kondensatabtrennung letztlich als Abluft wieder zur Überträgereinrichtung 60.

Durch den Wärme- und Wasserübertrag entzieht der kühlere Frischluftstrom dem heißen Abgasstrom einen Teil des Wasserdampfes und wird dabei deutlich erwärmt. Diese erwärmte Frischluft enthält einen erhöhten Anteil an Feuchte, die im Systemkreislauf zirkuliert. Die Grenztemperatur für einen ausgeglichenen Wasserhaushalt hängt dadurch im Wesentlichen von der Effizienz des Wasserübertrags ab.

Durch Verwendung einer derartigen Überträgereinrichtung 60 kann die Grenztemperatur eines DMBZ-Systems bei Betrieb mit 100 %igem Methanol um etwa 20 °C auf ca. 60 °C Umgebungstemperatur erhöht werden. Das erfindungsgemäße DMBZ System ist dadurch im Temperaturbereich von -40 °C bis +60 °C einsetzbar.

## Patentansprüche

1. Verfahren zur Wärme- und Wasserrückgewinnung aus der Abluft eines Brennstoffzellensystems mit den Schritten:
Führen der Abluft (50) durch einen ersten Abschnitt (61) einer Überträgereinrichtung (60);
Führen von Frischluft (40) für das Brennstoffzellensystem durch einen zweiten Abschnitt (62) der Überträgereinrichtung (60); und
Übertragen von Wärmeenergie und Wasser aus der Abluft (50) im ersten Abschnitt (61) auf die Frischluft (40) im zweiten Abschnitt (62).

2. Verfahren nach Anspruch 1, wobei das Übertragen von Wärmeenergie und Wasser in der Überträgereinrichtung (60) folgenden Schritt umfasst:
Leiten von Wasser vom ersten Abschnitt (61) in den zweiten Abschnitt (62) durch Kapillaren, welche den ersten und den zweiten Abschnitt miteinander verbinden.

3. Verfahren nach Anspruch 2, wobei die Überträgereinrichtung ein Bündel von Röhrchen umfasst, sich die Kapillaren in den Wänden der Röhrchen befinden, und wobei
(a) der erste Abschnitt einen Innenbereich innerhalb der Röhrchen umfasst und der zweite Abschnitt einen Außenbereich außerhalb der Röhrchen umfasst, oder
(b) der zweite Abschnitt einen Innenbereich innerhalb der Röhrchen umfasst und der erste Abschnitt einen Außenbereich außerhalb der Röhrchen umfasst.

4. Verfahren nach Anspruch 1, 2 oder 3, wobei die Frischluft (40) und die Abluft (50) im Gegenstrom zueinander geführt werden.

5. Verfahren nach einem der vorhergehenden Ansprüche, wobei die Abluft des Brennstoffzellensystems in einem vorangehenden Schritt in einem Wärmetauscher (70) abgekühlt wird.

6. Verfahren nach Anspruch 5, wobei das durch das Abkühlen im Wärmetauscher auskondensierte Wasser abgetrennt und dem Brennstoffzellensystem zugeführt wird.

7. Verfahren nach einem der vorhergehenden Ansprüche, wobei verhindert wird, dass sich die Abluft und die Frischluft in der Überträgereinrichtung mischen.

8. Brennstoffzellensystem, umfassend:
eine Überträgereinrichtung (60) zum Übertragen von Wärmeenergie und Wasser aus der Abluft (50) des Brennstoffzellensystems auf die Frischluft (40) für das Brennstoffzellensystem,
wobei die Überträgereinrichtung (60) einen ersten Abschnitt (61) und einen zweiten Abschnitt (62) aufweist und die Abluft (50) durch den ersten Abschnitt (61) und die Frischluft (40) durch den zweiten Abschnitt (62) führbar ist.

9. Brennstoffzellensystem nach Anspruch 8, weiterhin umfassend:
Kapillaren, welche den ersten und den zweiten Abschnitt miteinander verbinden, zum Durchleiten von Wasser vom ersten Abschnitt in den zweiten Abschnitt.

10. Brennstoffzellensystem nach Anspruch 9, wobei die Überträgereinrichtung ein Bündel von Röhrchen umfasst, sich die Kapillaren in den Wänden der Röhrchen befinden, und wobei
(a) der erste Abschnitt einen Innenbereich innerhalb der Röhrchen umfasst und der zweite Abschnitt einen Außenbereich außerhalb der Röhrchen umfasst, oder
(b) der zweite Abschnitt einen Innenbereich innerhalb der Röhrchen umfasst und der erste Abschnitt einen Außenbereich außerhalb der Röhrchen umfasst.

11. Brennstoffzellensystem nach Anspruch 10, worin die Überträgereinrichtung weiterhin eine Ummantelung aufweist, welche die Röhrchen und den Außenbereich außerhalb der Röhrchen umgibt.

12. Brennstoffzellensystem nach Anspruch 9, 10 oder 11, wobei die Frischluft und die Abluft im Gegenstrom zueinander führbar sind.

13. Brennstoffzellensystem nach einem der vorangehenden Ansprüche, weiterhin umfassend:
einen Wärmetauscher (70) zum Abkühlen der Abluft des Brennstoffzellensystems,
wobei der Wärmetauscher derart angeordnet ist, dass die Abluft zunächst durch den Wärmetauscher und nachfolgend durch die Überträgereinrichtung geführt wird.

14. Brennstoffzellensystem nach Anspruch 13, weiterhin umfassend:
Mittel zum Abtrennen von im Wärmetauscher auskondensiertem Wasser.

15. Brennstoffzellensystem nach einem der vorangehenden Ansprüche, wobei die Überträgereinrichtung derart ausgebildet ist, dass sich darin die Abluft und die Frischluft nicht mischen, insbesondere derart, dass die Kapillaren durch das darin durchgeleitete Wasser gegen Luftdurchtritt abdichtbar sind.
